# FASCICULE DE BREVET EUROPEEN

(11) **EP 2 533 973 B1**
(45) Date de publication et mention de la délivrance du brevet: **27.11.2013**
(21) Numéro de dépôt: 11708539.9
(22) Date de dépôt: 08.02.2011
(51) Int. Cl.: B32B 1/08, B32B 27/20, F16L 11/08, F16L 11/16

(54) **CONDUITE FLEXIBLE SOUS MARINE COMPRENANT UNE COUCHE COMPRENANT UNE RÉSINE POLYMÈRE COMPRENANT DES NANOPARTICULES DE TITANE MODIFIÉES EN SURFACE**
FLEXIBLES UNTERWASSERROHR MIT EINER SCHICHT MIT EINEM POLYMERHARZ MIT OBERFLÄCHENMODIFIZIERTEN TITAN-NANOPARTIKELN
FLEXIBLE UNDERWATER PIPE INCLUDING A LAYER INCLUDING A POLYMER RESIN INCLUDING SURFACE-MODIFIED TITANIUM NANOPARTICLES

(30) Priorité: 09.02.2010 FR 1050886
(43) Date de publication de la demande: 19.12.2012
(73) Titulaire: Technip France, 92400 Courbevoie (FR)
(72) Inventeur: TRONC, Frédéric, F-76000 Rouen (FR); COUTAREL, Alain, F-76130 Mont Saint Aignan (FR)
(74) Mandataire: Blot, Philippe Robert Emile
(86) Numéro de dépôt international: PCT/FR2011/050259
(87) Numéro de publication internationale: WO 2011/098717

(56) Documents cités:
- WO-A1-2008/119676
- FR-A1- 2 918 067
- US-A1- 2009 308 475
- DATABASE WPI Week 200744 Thomson Scientific, London, GB; AN 2007-446502 XP002601063, & CN 1 891 746 A (LV J) 10 janvier 2007 (2007-01-10)

## Description

La présente invention concerne une conduite flexible sous-marine destinée au transport des fluides en eau profonde. Ces fluides sont notamment des gaz ou des liquides, de préférence des hydrocarbures.

Les conduites flexibles de transport des hydrocarbures comportent généralement, de l'extérieur vers l'intérieur de la conduite :
- une gaine polymérique externe pour protéger l'ensemble de la conduite et notamment pour empêcher l'eau de mer de pénétrer dans son épaisseur,
- des nappes d'armures de traction,
- une voûte de pression,
- une gaine polymérique interne d'étanchéité, et
- éventuellement une carcasse métallique.

Si la conduite comprend une carcasse métallique, elle est dite à passage non lisse ("rough bore" en langue anglaise). Si la conduite est exempte de carcasse métallique, elle est dite à passage lisse (" smooth-bore " en langue anglaise). Généralement, pour le transport d'hydrocarbures, une conduite comportant une carcasse est préférée, alors qu'une conduite exempte de carcasse sera adaptée pour le transport d'eau et/ou de vapeur d'eau sous pression.

La carcasse métallique et la voûte de pression sont constituées d'éléments longitudinaux enroulés à pas court, et elles confèrent à la conduite sa résistance aux efforts radiaux tandis que les nappes d'armures de traction sont constituées de fils métalliques enroulés selon des pas longs pour reprendre les efforts axiaux.

La nature, le nombre, le dimensionnement et l'organisation des couches constituant les conduites flexibles sont essentiellement liés à leurs conditions d'utilisation et d'installation. Les conduites peuvent comprendre des couches supplémentaires à celles susmentionnées.

Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 55°, typiquement compris entre 25° et 55° pour les nappes d'armures.

Ces conduites flexibles conviennent notamment au transport de fluides, notamment d'hydrocarbures dans les fonds marins et ce, à de grandes profondeurs. Plus précisément elles sont dites de type non lié ("unbonded" en langue anglaise) et elles sont ainsi décrites dans les documents normatifs publiés par l'American Petroleum Institute (API), API 17J et API RP 17B.

Les conduites flexibles peuvent être utilisées à grande profondeur, typiquement jusqu'à 2500 mètres de profondeur. Elles permettent le transport de fluides, notamment d'hydrocarbures, ayant une température de plus de 60°C, atteignant typiquement 130°C et pouvant même dépasser les 150°C et une pression interne pouvant atteindre 1000 bars, voire 1500 bars.

Le matériau constitutif de la gaine polymérique interne d'étanchéité doit être stable chimiquement et capable de résister mécaniquement au fluide transporté et à ses caractéristiques (composition, température et pression). Ce matériau doit combiner des caractéristiques de ductilité, de résistance au temps (généralement, la conduite doit avoir une durée de vie d'au moins 20 ans), de résistance mécanique, à la chaleur et à la pression. Le matériau doit notamment être inerte chimiquement vis-à-vis des composés chimiques constituant le fluide transporté.

Des conduites comprenant une gaine polymérique interne d'étanchéité à base de polymère peuvent notamment être utilisées. Toutefois, les propriétés thermomécaniques des polymères dans les conditions d'utilisation précédemment citées (hautes température et pression, acidité élevée et présence d'eau) peuvent être nettement diminuées. Ainsi, de nombreux travaux ont été rapportés pour tenter d'améliorer ces propriétés, en particulier pour améliorer leurs résistances au fluage et à la tension ou compression.

L'introduction de charges dans des résines polymères permet d'améliorer les propriétés chimiques et mécaniques des résines. Il est souvent considéré que l'amélioration des propriétés mécaniques signifie une augmentation de la résistance à la traction et/ou à la flexion, et/ou une augmentation de la rigidité. Toutefois, ces améliorations ne sont pas spécifiquement recherchées dans le domaine des conduites flexibles sous marines. L'amélioration des propriétés mécaniques recherchée dans le domaine des conduites flexibles sous marines exposées à des températures et/ou pressions élevées est l'amélioration de la résistance au fluage (« creep resistance » en anglais), et plus précisément la résistance au fluage en compression.

Le fluage est l'extension ou la déformation de la résine polymère soumise à une contrainte continue. Le fluage a lieu dans toute partie en polymère soumise à une contrainte. L'écoulement viscoélastique du polymère avec le temps, due à la mobilité des chaînes de polymères les unes par rapport aux autres, en est la cause. Des hautes températures et/ou pressions accélèrent le fluage. Des résines dans lesquelles la mobilité des chaînes de polymères les unes par rapport aux autres est diminuée sont donc recherchées.

Le transport par la conduite flexible de fluides sous pression et à haute température soumet la gaine polymérique interne d'étanchéité (gaine de pression de la conduite) à des conditions favorisant le fluage du matériau polymère dans les interstices (ou déjoints) situés entre le ou les fils métalliques enroulés à pas court et constituant la voûte de pression. Ce phénomène présente plusieurs inconvénients et doit donc être contrôlé ou limité. Ainsi, lorsque la gaine d'étanchéité flue excessivement dans les déjoints, il peut se produire localement soit des craquelures ou des ruptures locales de la gaine de pression pouvant dans les cas extrêmes engendrer une perte d'étanchéité. De plus, un fluage important peut combler totalement les interstices entre les fils de la voûte de pression et ainsi limiter la flexibilité de la structure.

Pour résoudre ce problème de fluage de la gaine de pression, on contrôle généralement la taille des déjoints entre les fils de la voûte de pression, de façon à limiter le volume à l'intérieur duquel la gaine peut fluer. A cet effet, la voûte de pression est généralement constituée de fils agrafés entre eux, le dispositif d'agrafage permettant d'éviter que les déjoints ne deviennent trop importants. En pratique, l'écartement maximal entre deux fils adjacents (largeur du déjoint) est de l'ordre de 2 à 3 mm. Il n'est pas avantageux de réduire excessivement la largeur des déjoints, car cette réduction excessive limite la flexibilité de la voûte de pression et donc de la conduite.

Certains ont donc cherché à réduire la profondeur des déjoints, ce qui a conduit à insérer un dispositif anti-fluage du type fil plat de faible épaisseur au droit des déjoints entre fils agrafés, de façon à empêcher le fluage à l'intérieur desdits déjoints, décrit par la figure 3 de WO 00/09899. Cette solution permet certes de limiter efficacement le fluage, particulièrement dans le cas où la voûte de pression est constituée de fil de forte épaisseur, mais elle s'avère assez complexe et délicate à mettre en oeuvre.

On connaît aussi des solutions consistant à augmenter l'épaisseur de la gaine de pression voire même à ajouter une gaine intermédiaire entre la gaine de pression et la voûte de pression. Cette gaine intermédiaire polymérique est dite sacrificielle car son unique fonction est précisément de reprendre le phénomène de fluage et de protéger ainsi la gaine de pression. Ces solutions génèrent des surcoûts importants de matière (la gaine sacrificielle a une épaisseur de l'ordre de 3mm, ce qui est loin d'être négligeable puisque l'épaisseur de la gaine de pression est couramment de l'ordre de 8 à 11 mm) et/ou de transformation.

Les documents US 7,123,826, WO 2008/113362 et WO 2008/146048 divulguent des conduites flexibles dont certaines couches polymériques comportent des nanoparticules. Cependant, ces solutions ne permettent pas de résoudre le problème précité de fluage de la gaine interne d'étanchéité.

Le brevet FR 2 918 067 et la demande US 2009/308475 décrivent des matériaux polymériques comprenant des nanotubes éventuellement fonctionnalisés respectivement d'au moins un élément chimique choisi parmi les éléments des colonnes IIIa, IVa et Va du tableau périodique, ou de carboné, pour augmenter la résistance au fluage d'une conduite de transport d'hydrocarbures comprenant une couche en un tel matériau.

Cela étant, ces matériaux sont exempts de nanoparticules de dioxyde de titane.

Un des objectifs de la présente invention est donc de fournir une conduite flexible sous marine comprenant une couche à base de polymère présentant une résistance au fluage améliorée permettant son utilisation pour le transport de fluides, tels que des hydrocarbures, à haute pression et haute température.

A cet effet, selon un premier objet, l'invention a pour objet une conduite flexible sous marine destinée au transport de fluides, notamment d'hydrocarbures, comprenant au moins une couche comprenant une résine polymère comprenant des nanoparticules de dioxyde de titane modifiées en surface et liées chimiquement au polymère.

Les inventeurs ont en effet découvert que des nanoparticules de dioxyde de titane modifiées en surface et liées chimiquement au polymère permettent de diminuer la mobilité des chaînes de polymère les unes par rapport aux autres et donc d'améliorer la résistance au fluage du polymère, en particulier d'améliorer sa résistance au fluage en compression.

Par nanoparticules « liées chimiquement » au polymère, on entend qu'il existe des liaisons chimiques entre le polymère et les nanoparticules de dioxyde de titane modifiées en surface, une liaison covalente ou par liaison hydrogène. De préférence, les nanoparticules de dioxyde de titane modifiées en surface sont liées au polymère par liaisons covalentes et/ou hydrogène.

Par nanoparticule de dioxyde de titane « modifiée en surface », on entend qu'une nanoparticule comprend en surface au moins un groupement susceptible de former une liaison chimique avec le polymère. On entend par « groupement susceptible de former une liaison chimique » tout atome, fonction susceptible de former une liaison chimique ou tout groupe porteur d'un tel atome ou d'une telle fonction.

Les groupements susceptibles de former une liaison chimique peuvent être de nature très variée. Chaque groupement susceptible de former une liaison chimique en surface des nanoparticules de dioxyde de titane a typiquement la formule (I) suivante :

-O-L-(Rⁱ)n (I),

dans laquelle :
- n représente 1, 2 ou 3,
- -L- représente un bras espaceur substitué par n groupes Rⁱ, L étant choisi parmi :
   - un groupe -L'-, -(CO)-L'-, -(CO)-NH-L'-, -Si-(A)₃₋ₙ(L')ₚ(O-L')_{q} - ou 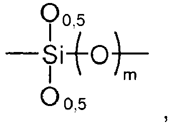 où :
      - p et q sont indépendamment des nombres entiers de 1 à 3 tels que la somme p + q vaut n,
      - m représente 0 ou 1,
      - L' est une chaîne hydrocarbonée linéaire, ramifiée ou cyclique, saturée, insaturée ou aromatique plurivalente,
      - A représente un groupe -A' ou -O-A' où A' représente une chaîne hydrocarbonée linéaire, ramifiée ou cyclique, saturée, insaturée ou aromatique monovalente,
- i est un nombre entier variant de 1 à n,
- pour chaque valeur de i, Rⁱ est indépendamment choisi parmi un halogène ou un groupe -OCOCl, -COCI, -SO₂Cl, -COOR₁, -COR₁, -CR₁R₂Cl, -OR₁, -SR₁, -NR₁R₂, - NR₁COR₂, -COR₁NR₂, -NR₁-CO-NR₂R₃, -O-CO-NR₁, -NR₁-CO-OR₂, -CN, -NO₂, -NCO, 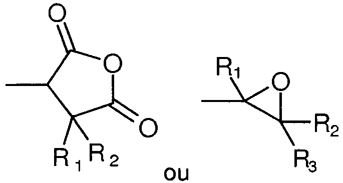 où R₁, R₂ et R₃ représentent indépendamment H ou une chaîne hydrocarbonée linéaire, ramifiée ou cyclique, saturée, insaturée ou aromatique, elle même éventuellement substituée par un ou plusieurs des groupes choisis parmi un halogène ou un groupe -OCOCl, -COCI, -SO₂Cl, -COOR₄, -COR₄, - CR₄R₅Cl, -OR₄, -SR₄, -NR₄R₅, NR₄COR₅, -COR₄NR₅, -NR₄-CO-NR₅R₆, -O-CO-NR₄, - NR₄-CO-OR₅, -CN, -NO₂, -NCO, 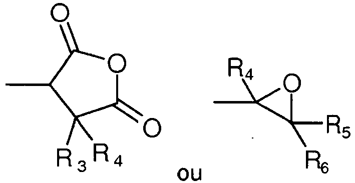 où R₄, R₅ et R₆ représentent indépendamment H ou une chaîne hydrocarbonée linéaire, ramifiée ou cyclique, saturée, insaturée ou aromatique.

n correspond au nombre de groupe Rⁱ porté par le groupement susceptible de former une liaison chimique.

A' et/ou L' sont de préférence une chaîne hydrocarbonée comprenant de 1 à 10 atomes de carbone, notamment de 2 à 5 atomes de carbone. A' est de préférence un alkyle, un alcényle, un aryle, un arylalkyle ou un alkylaryle. Le phényle est l'aryle préféré.

Lorsque L représente 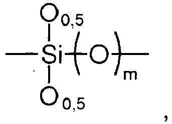 n représente 1 et les groupements susceptibles de former une liaison chimique sont sous forme d'oligomères ayant comme motif 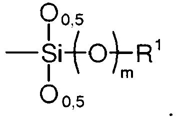 La surface de la nanoparticule a par exemple la formule suivante pour un oligomère comprenant trois motifs:

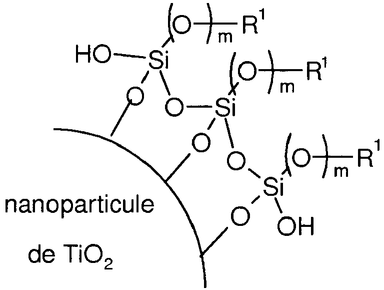

L est de préférence un groupe -Si-(A)₃₋ₙ(L')ₚ(O-L')_{q} -. Le groupement susceptible de former une liaison chimique a alors la formule (II) suivante :

-O-Si-(A)₃₋ₙ(L'-Rⁱ)ₚ(O-L'-Rⁱ)_{q} (II),

dans lesquelles A, n, p, q, i, L' et Rⁱ sont tels que définis ci-dessus.

La fonction -O-Si- est en effet avantageusement plus résistante que des fonctions ester (-L- représente-(CO)-L'-) ou carbamate (-L- représente -(CO)-NH-L'-). Les conduites selon l'invention comprenant une couche comprenant une résine polymère comprenant des nanoparticules de dioxyde de titane comprenant des groupes de formule (II) en surface sont par conséquent généralement plus stables dans le temps et sont moins dégradées chimiquement par le fluide transporté dans la conduite.

Le groupe -COOH est un Rⁱ particulièrement préféré.

Dans la couche de la conduite flexible sous marine selon l'invention, les nanoparticules de dioxyde de titane modifiées en surface sont liées chimiquement au polymère grâce au(x) groupement(s) susceptible(s) de former une liaison chimique.

Dans un premier mode de réalisation, la liaison chimique entre les nanoparticules de dioxyde de titane modifiées en surface et le polymère dans la couche de la conduite est une liaison covalente. Cette liaison chimique peut notamment être une liaison de type ester, amide, amine, éther, thioéther, urée, imine, imide, sulfonamide, carbamate ou phosphate. Ce mode de réalisation est particulièrement préféré car les liaisons covalentes sont généralement les liaisons chimiques les plus stables.

Dans un deuxième mode de réalisation, la liaison chimique entre les nanoparticules de dioxyde de titane modifiées en surface et le polymère dans la couche de la conduite est une liaison hydrogène. Cette liaison chimique existe en présence d'au moins un donneur de liaison hydrogène et au moins un accepteur de liaison hydrogène, l'un étant sur les nanoparticules et l'autre étant sur le polymère. L'accepteur est notamment un atome de fluor, d'azote ou d'oxygène et le donneur est un H acide, typiquement tel qu'un H porté par une amine ou un alcool, mais aussi un amide, une urée, un carbamate...De préférence, les nanoparticules de dioxyde de titane sont porteuses de groupements COOH en surface qui sont particulièrement efficaces pour former des liaisons hydrogène avec le polymère.

La résine polymère comprenant des nanoparticules de dioxyde de titane modifiées en surface et liées par liaison hydrogène au polymère présente avantageusement une capacité absorption de l'humidité réduite, comme les fonctions susceptibles de former des liaisons hydrogène du polymère sont déjà engagées dans des liaisons hydrogène avec les nanoparticules et ne sont plus disponibles pour former des liaisons hydrogène avec l'eau.

Dans un troisième mode de réalisation, le polymère et les nanoparticules de la couche de la conduite sont liés à la fois par liaisons covalentes et liaisons hydrogène.

Les nanoparticules de la couche de la conduite ont généralement un diamètre moyen de moins de 300 nm, notamment de moins de 200 nm, de préférence de moins de 100 nm, en particulier de moins de 50 nm. Plus le diamètre moyen des nanoparticules diminue, plus la surface spécifique des nanoparticules augmente, ce qui permet d'augmenter le nombre de liaisons chimiques entre les nanoparticules et le polymère, en particulier lorsque les liaisons chimiques sont des liaisons hydrogène, et ainsi de diminuer la mobilité des chaînes de polymères les unes par rapport aux autres, conduisant à une amélioration de la résistance au fluage de la résine polymère.

Le dioxyde de titane existe sous différentes formes cristallines. Le dioxyde de titane des nanoparticules de la couche de la conduite peut être sous forme de rutile, d'anatase, de brookite, de srilankite, de TiO₂ α ou de TiO₂ β, de préférence il est sous forme d'anatase et/ou de rutile.

Le polymère de la couche de la conduite flexible est un polymère capable de se lier chimiquement aux nanoparticules, typiquement par des liaisons hydrogène et/ou covalentes.

Généralement, le polymère de la couche de la conduite flexible est un polyamide, un homopolymère ou copolymère de polyfluorure de vinylidène comportant éventuellement des chaînes latérales fonctionnelles ou un polyéthylène comportant des chaînes latérales fonctionnelles. Des chaînes latérales fonctionnelles sont, par exemple, des chaînes latérales porteuses de groupes COOH, NH₂, OH, époxyde, nitrile, anhydride. Les polymères Kynar^{®} ADX 710, 711, 720 et 721 vendus par Arkéma peuvent par exemple être utilisés.

Un homopolymère ou copolymère de polyfluorure de vinylidène convenant à l'invention est porteur de fonctions fluorure avec lesquels les nanoparticules de dioxyde de titane modifiées en surface sont susceptibles de former des liaisons hydrogène.

Un homopolymère ou copolymère de polyfluorure de vinylidène comportant des chaînes latérales fonctionnelles ou un polyéthylène comportant des chaînes latérales fonctionnelles convenant à l'invention comporte des chaînes latérales fonctionnelles, par exemple des chaînes latérales porteuses de groupes COOH, NH₂, OH, époxyde, nitrile, anhydride, avec lesquels les nanoparticules de dioxyde de titane modifiées en surface sont susceptibles de former des liaisons hydrogène et/ou covalentes.

Un polyamide convenant à l'invention est typiquement porteur d'une fonction amine terminale et/ou d'une fonction acide carboxylique terminale et de fonctions amide. Le polyamide peut également comporter des chaînes latérales fonctionnelles, par exemple des chaînes latérales porteuses de groupes COOH, NH₂, OH, époxyde, nitrile, anhydride. Ainsi, dans un mode de réalisation, le groupement des nanoparticules de l'étape a) est susceptible de former une liaison hydrogène et/ou covalente avec les fonctions amide, acide carboxylique, amine du polyamide et/ou les fonctions des chaînes latérales du polyamide.

De préférence, le polymère de la couche de la conduite flexible est un polyamide. Le polyamide de la couche de la conduite flexible sous marine peut être un homopolyamide ou un copolyamide, tel que, par exemple, du polyamide 6, du polyamide 4.6, du polyamide 6.6, du polyamide 11, du polyamide 12, du polyamide 12.12, du polyamide 10.12, du polyamide 6.10, du polyamide 6.12, du polyamide 6.9, du polyamide 9.9, du polyamide 9T, du polyamide 12T, du polyamide 10T, du polyamide 121, du polyamide 12T, du polyamide 12T.12, du polyamide 10T.12, du polyamide 12T.106, du polyamide 10T.106, du polyamide 6.66, du polyamide 6.612, du polyamide 6.66.610, du polyamide 6.66.12, du polyamide 6.6T, du polyamide 6T.6, du polyamide 6T.12, du polyamide 6T.6I, du polyamide 61.6T, du polyamide 6.61, du polyamide 6T.66, du polyamide 6T.66.12, du polyamide 12.MACMI, du polyamide 66.61.6T, du polyamide MXD6.6, MXD10, un polyphtalamide, un polyarylamide, un polyesteramide, un polyétheresteramide, un polyétheramide ou leurs mélanges.

De préférence, le polyamide est choisi parmi le polyamide 11, le polyamide 12, le polyamide 6.12 et un polyphtalamide.

La couche de la conduite flexible sous marine comprenant une résine polymère peut également comprendre des additifs, tels que : des antioxydants, des plastifiants et toutes autres charges, comme par exemple du noir de carbone.

La couche comprenant une résine polymère comprenant des nanoparticules de dioxyde de titane modifiées en surface et liées chimiquement au polymère peut notamment être la gaine polymérique interne d'étanchéité dans une conduite flexible sous marine telle que définie ci-dessus, mais elle peut aussi être une couche intermédiaire située entre deux autres couches.

Dans un mode de réalisation, la conduite flexible sous marine comprend en outre les couches suivantes :
- au moins une nappe d'armure de traction,
- éventuellement une voûte de pression, et
- éventuellement une carcasse métallique.

Selon un deuxième objet, l'invention concerne un procédé de préparation de la conduite flexible sous marine précitée, comprenant les étapes suivantes :
a) formation d'une résine polymère comprenant des nanoparticules de dioxyde de titane modifiées en surface et liées chimiquement au polymère comprenant le mélange d'un polymère et de nanoparticules de dioxyde de titane comprenant au moins un groupement susceptible de former une liaison chimique, de préférence une liaison hydrogène et/ou covalente, avec ledit polymère,
b) extrusion du mélange obtenu à l'étape a) pour former une couche comprenant ladite résine,
c) assemblage de la couche obtenue à l'étape b) avec au moins une autre couche.

Ledit groupement susceptible de former une liaison hydrogène et/ou covalente avec ledit polymère est de préférence choisi parmi les groupements susceptibles de former une liaison hydrogène et/ou covalente avec ledit polymère et est notamment choisi parmi les groupements de formule (I) précitée.

Le mélange de l'étape a) peut notamment être réalisé par mélange à l'état fondu du polymère (« melt mixing » en anglais), par compoundage, par extrusion, par extrusion réactive (c'est-à-dire en réalisant les étapes a et b simultanément). Excepté lorsque l'étape a) est réalisée par extrusion réactive, le mélange de l'étape a) peut être utilisé soit en mélange maître soit en matrice principale pour former la couche comprenant la résine polymère.

Généralement, dans l'étape a) du procédé lorsque le mélange du polymère et des nanoparticules de dioxyde de titane modifiées en surface constitue la matrice principale, 0,2 à 10% en poids, notamment de 0,5 à 8% en poids, de préférence 1 à 5% en poids, de nanoparticules de dioxyde de titane modifiées en surface sont utilisées par rapport au poids total du mélange. Lorsque le mélange du polymère et des nanoparticules de dioxyde de titane modifiées en surface est utilisé comme mélange maître, le pourcentage massique des nanoparticules de dioxyde de titane modifiées en surface dans la résine polymère peut atteindre 30% voire 50%.

Lors de l'étape a) du procédé, des additifs peuvent être ajoutés, en particulier ceux susmentionnés.

Dans un mode de réalisation du procédé, ledit groupement est susceptible de former une liaison covalente avec le polymère et est préférentiellement choisi parmi les groupements de formule (I) précitée dans laquelle au moins un Rⁱ est choisi parmi un halogène ou un groupe -COCl, -OCOCl, -SO₂Cl, -COOH, -CR₁R₂Cl, -OH, -SH, -NR₁H, -CN, -NCO, 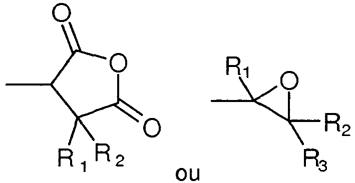 où R₁, R₂ et R₃ sont tels que définis ci-dessus.

Ainsi, lors de l'étape a), au moins une liaison covalente est formée entre le polymère et les nanoparticules modifiées en surface.

A titre illustratif, des nanoparticules de dioxyde de titane comprenant un groupement en surface porteur d'une fonction :
- halogène peuvent former une liaison amine avec une fonction amine du polymère (par substitution nucléophile),
- alcool peuvent former une liaison ester avec une fonction acide carboxylique du polymère,
- thiol peuvent former une liaison thioester avec une fonction acide carboxylique du polymère,
- époxyde peuvent former une liaison ester avec une fonction acide carboxylique du polymère et/ou une liaison amine avec une fonction amine du polymère,
- amine peuvent former une liaison amide avec une fonction acide carboxylique du polymère,
- acide carboxylique, chlorure d'acyle ou anhydride peuvent former une liaison amide avec une fonction amine du polymère,
- isocyanate peuvent former une liaison urée avec une fonction amine du polymère,
- chloroformiate peuvent former une liaison carbamate avec une fonction amine du polymère,
- polymère de sulfonyle peut former une liaison sulfonamide avec la fonction amine du polymère.

Dans ce mode de réalisation, le procédé peut comprendre préalablement à l'étape b) une étape de couplage chimique pour former une liaison covalente entre ledit groupement et les fonctions du polymère.

Cette étape de couplage chimique peut être catalysée, notamment par la chaleur, des radiations ou un catalyseur. Par exemple, si le polymère est porteur d'une fonction acide carboxylique, la réaction d'estérification entre la fonction hydroxyle en surface de nanoparticules de dioxyde de titane et la fonction acide carboxylique d'un polymère peut être catalysée par une base. Il est à la portée de l'homme du métier d'adapter les conditions du couplage chimique (température, pression, utilisation d'un catalyseur, durée de réaction) pour permettre la création de la liaison covalente.

L'étape de couplage chimique peut être réalisée en même temps que l'étape a). Le couplage chimique a alors lieu lors du mélange des nanoparticules et du polymère. Ce couplage chimique peut être non catalysé ou catalysé. Par exemple, lors du mélange du polymère et des nanoparticules, le milieu peut être chauffé, irradié, ou un catalyseur peut être ajouté en plus du polymère et des nanoparticules. L'étape de couplage chimique peut également être réalisée après l'étape a). Par exemple, après avoir mélangé le polymère et les nanoparticules, le milieu peut être chauffé, irradié, ou un catalyseur peut être ajouté au milieu.

L'augmentation de la masse moléculaire et/ou du nombre de points de réticulation permet de diminuer la mobilité des chaînes de polymères les unes par rapport aux autres et ainsi d'obtenir un polymère ayant une résistance au fluage améliorée. Une conduite flexible sous marine comprenant un tel polymère est donc adaptée pour être utilisée pour le transport de fluides sous haute pression et haute température.

Dans un deuxième mode de réalisation du procédé, ledit groupement est susceptible de former une liaison hydrogène avec le polymère et est choisi parmi les groupements de formule (I) telle que définie ci-dessus où au moins un Rⁱ est choisi parmi un groupe -F, -COOR₁, -COR₁, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂ où R₁ et R₂ sont tels que définis ci-dessus.

De préférence, les nanoparticules de dioxyde de titane modifiées en surface sont porteuses de groupements COOH qui sont particulièrement efficaces pour former des liaisons hydrogène avec les fonctions du polymère. Ainsi, lors de l'étape a), des liaisons hydrogène sont formées entre le polymère et les nanoparticules.

L'étape b) d'extrusion peut être réalisée par toute méthode connue de l'homme du métier.

Généralement, la résine obtenue à la fin de l'étape a) est séchée, typiquement dans une étuve à une température supérieure à 70°C, généralement pendant plusieurs heures, par exemple quatre heures à 80°C, avant d'alimenter une extrudeuse mono-vis, bi-vis, une extrudeuse réactive (et dans ce cas les étapes a) et b) sont simultanées puisque le mélange entre les nanoparticules et le polymère et l'extrusion se font dans le même outillage) ou une co-extrudeuse permettant de réaliser une couche comprenant une résine polymère comprenant des nanoparticules de dioxyde de titane modifiées en surface et liées chimiquement au polymère.

La couche comprenant la résine obtenue à la fin de l'étape b) est typiquement tubulaire, a généralement un diamètre de 50 mm à 600 mm, de préférence de 50 à 400 mm, une épaisseur de 1 mm à 150 mm, préférentiellement de 30 à 80 mm et une longueur de 1 m à 10 km.

Le procédé comprend l'étape c) d'assemblage de la couche obtenue lors de l'étape b) avec au moins une autre couche pour former la conduite sous marine flexible, notamment avec une gaine polymérique externe, une nappe d'armure de traction, éventuellement une voûte de pression, et éventuellement une carcasse métallique.

Dans un mode de réalisation, l'extrusion du mélange obtenu à l'étape a) est réalisée sur une autre couche, typiquement la carcasse, pour obtenir un ensemble (carcasse / couche en résine polymère comprenant des nanoparticules de dioxyde de titane modifiées en surface et liées chimiquement au polymère) qui sera alors rapporté et calandré avec au moins une autre couche lors de l'étape c), typiquement une voûte de pression, des nappes d'armures de traction et une gaine polymérique externe. Ce mode de réalisation permet notamment de réaliser des conduites flexibles à passage non lisse (« Rough bore » en anglais).

Dans un autre mode de réalisation, l'extrusion du mélange obtenu à l'étape a) est indépendante et la couche obtenue à la fin de l'étape b) est alors rapportée et calandrée avec au moins une autre couche lors de l'étape c), typiquement une voûte de pression, des nappes d'armures de traction et une gaine polymérique externe. Ce mode de réalisation permet notamment de réaliser des conduites flexibles à passage lisse (« Smooth bore » en anglais)

Les couches sont assemblées pour former une conduite flexible sous marine de type non lié ("unbonded" en langue anglaise), telle que décrite dans les documents normatifs publiés par l'American Petroleum Institute (API), API 17J et API RP 17B.

Des nanoparticules de dioxyde de titane modifiées en surface sont disponibles commercialement, par exemple les nanoparticules Aeroxyde^{®} T805 de Evonik^{®}, qui sont modifiées en surface par réaction avec du triméthoxyoctyl silane. Les nanoparticules de dioxyde de titane utilisées comme produit de départ peuvent notamment être du TiO₂ Aeroxide^{®} P25 commercialisé par Evonik.

Des nanoparticules de dioxyde de titane modifiées en surface peuvent être obtenues par des méthodes connues de l'homme du métier par réaction des fonctions hydroxyle naturellement présentes en surface de nanoparticules de dioxyde de titane, notamment par estérification (L représente -(CO)-L'), éthérification (L représente -L'-), formation d'une liaison carbamate (L représente -(CO)-NH-L'-) ou par formation d'une liaison -O-Si (L représente -SI-(A)₃₋ₙ(L')ₚ(O-L')_{q} -), comme décrit par Siwinska-Stefanska et al. (Physocochemical Problems of Mineral Processing, 41 (2007), 205-214.

En particulier, les groupements de formule (II) peuvent être formés par réaction des fonctions hydroxyle naturellement présentes en surface de nanoparticules de dioxyde de titane avec des composés de formule (III) suivantes :

A-O-Si-(A)₃₋ₙ(L'-Rⁱ)ₚ(O-L'-Rⁱ)_{q} (III),

dans lesquelles A, n, p, q, i, L' et Rⁱ sont tels que définis ci-dessus. La réaction est illustrée au schéma ci-dessous.

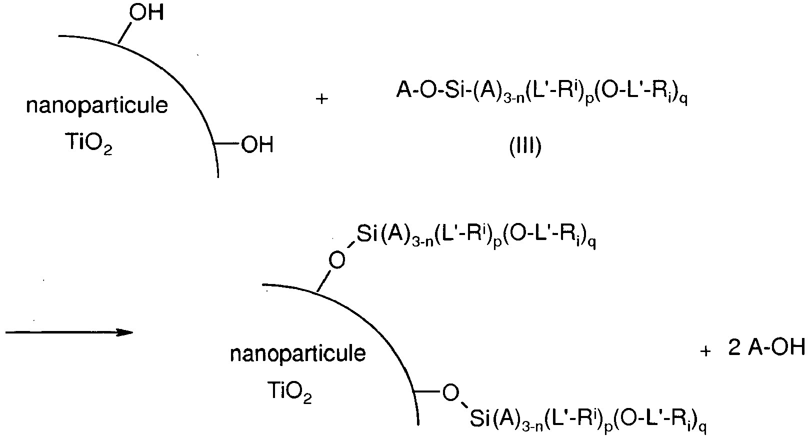

Ainsi, dans un mode de réalisation, le procédé comprend avant l'étape a) une étape de préparation des nanoparticules de dioxyde de titane comprenant en surface un groupement de formule (II) susceptible de former une liaison hydrogène et/ou covalente avec un polymère par réaction de nanoparticules de dioxyde de titane avec un composé de formules (III) telles que définies ci-dessus.

La réaction peut être effectuée en solution aqueuse, alcoolique ou hydroalcoolique, l'alcool étant de préférence le méthanol ou l'éthanol. Une solution éthanol/eau est particulièrement préférée, notamment une solution éthanol/eau 95/5 dont le pH est ajusté à une valeur de 4,5 à 5,5 par addition d'acide acétique. La température de réaction est typiquement supérieure ou égale à la température ambiante, de préférence de 18°C à 40°C. Après réaction, les nanoparticules sont généralement décantées, rincées, par exemple par de l'éthanol, puis séchées.

Selon un troisième objet, l'invention a pour objet une conduite flexible sous marine susceptible d'être obtenue par le procédé précité.

La présence de nanoparticules de dioxyde de titane modifiées en surface et liées chimiquement au polymère dans une résine polymère utilisée comme couche de la conduite flexible sous marine selon l'invention présente les avantages suivants :
- la résistance au fluage de la résine peut être améliorée en adaptant le pourcentage de nanoparticules introduites dans la résine et la nature des nanoparticules utilisées, plus particulièrement en fonction de la nature du groupement susceptible de se lier au polymère et donc de la nature de la liaison avec le polymère (liaison covalente ou hydrogène et nature de la liaison covalente (ester, amide, sulfonamide, ...)), du nombre de groupements capables de former une liaison chimique avec le polymère,
- la résistance au fluage de la résine est améliorée tout en conservant, voire en améliorant, les autres propriétés mécaniques, telles que la résistance à la traction et à la flexion, et la rigidité,
- la capacité d'absorption d'humidité de la résine est diminuée, et sa vitesse de dégradation est donc ralentie,
- la dispersion des nanoparticules dans la résine est améliorée grâce aux liaisons chimiques entre les nanoparticules et le polymère,
- la vitesse de propagation des fissures dans la résine est diminuée,
- les nanoparticules de dioxyde de titane modifiées en surface sont peu coûteuses,
- la préparation de la conduite selon l'invention peut être réalisée en utilisant l'équipement standard de production de conduites flexibles (techniques classiques de mélange et d'extrusion).

Ces avantages permettent l'utilisation de la conduite flexible sous marine pour le transport de fluides. Ainsi, selon un quatrième objet, l'invention a pour objet l'utilisation de la conduite flexible sous marine précitée pour le transport de fluides, notamment de gaz ou de liquides, de préférence d'hydrocarbures.

D'autres particularités et avantages de l'invention ressortiront à la lecture de la description faite ci-après de modes de réalisation particuliers de l'invention, donnés à titre indicatif mais non limitatif, en référence à la figure.
La figure est une vue schématique partielle en perspective d'une conduite flexible selon l'invention.

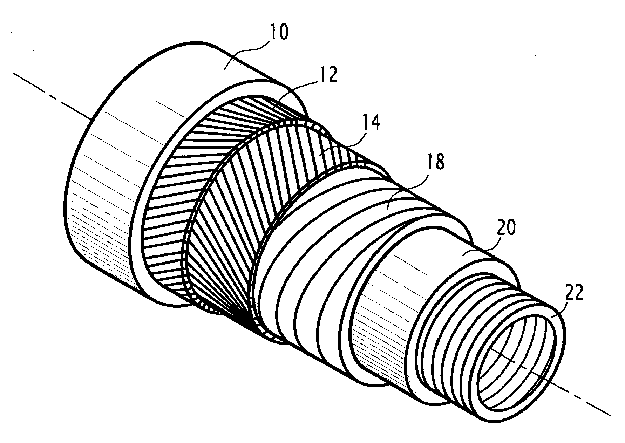

La Figure 1 illustre une conduite conforme à l'invention comprenant, de l'extérieur vers l'intérieur :
- une gaine polymérique externe dite d'étanchéité 10 (appelée gaine externe),
- une nappe externe d'armures de traction 12, une nappe interne d'armures de traction 14 enroulée en sens opposé de la nappe externe 12,
- une voûte de pression 18 de reprise des efforts radiaux générés par la pression du fluide transporté,
- une gaine polymérique interne dite d'étanchéité 20 comprenant une résine polymère comprenant des nanoparticules de dioxyde de titane modifiées en surface selon l'invention, et
- une carcasse interne 22 de reprise des efforts radiaux d'écrasement.

Du fait de la présence de la carcasse interne 22, cette conduite est dite à passage non lisse (" rough bore " en langue anglaise). L'invention pourrait aussi s'appliquer à une conduite dite à passage lisse (" smooth-bore " en langue anglaise), ne comportant pas de carcasse interne.

De même, on ne sortirait pas du champ de présente invention en supprimant la voûte de pression 18, sous réserve que les angles d'hélice des fils constituant les nappes d'armures 12, 14 soient proches de 55°et en sens opposé.

Les nappes d'armures 12, 14 sont obtenues par enroulement à pas long d'un ensemble de fils en matériau métallique ou composite, de section généralement sensiblement rectangulaire. L'invention s'appliquerait aussi si ces fils avaient une section de géométrie circulaire ou complexe, du type par exemple T autoagrafé. Sur la figure 1, seules deux nappes d'armures 12 et 14 sont représentées, mais la conduite pourrait aussi comporter une ou plusieurs paires supplémentaires d'armures. La nappe d'armures 12 est dite externe car elle est ici la dernière, en partant de l'intérieur de la conduite, avant la gaine d'étanchéité externe 10.

La conduite flexible peut également comprendre des couches non représentées sur la figure 1, telles que :
- une couche de maintien entre la gaine polymérique externe 10 et les nappes d'armures de traction 12 et 14, ou entre deux nappes d'armures de traction,
- une ou plusieurs couches anti-usure (" anti-wear layer " en anglais) en matériau polymérique en contact soit avec la face interne de la couche de maintien précitée, soit avec sa face externe, soit avec les deux faces, cette couche anti-usure permettant d'éviter que la couche de maintien s'use au contact avec des armures métalliques. Les couches anti-usure, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (" polyvinylidene fluoride " en anglais). On pourra aussi se reporter au document WO2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS).

## Revendications

1. Conduite flexible sous marine destinée au transport de fluides, notamment d'hydrocarbures, comprenant au moins une couche comprenant une résine polymère, **caractérisée en ce que** la résine polymère comprend des nanoparticules de dioxyde de titane modifiées en surface et liées par liaison covalente et/ou hydrogène au polymère.

2. Conduite flexible sous marine selon la revendication 1, dans laquelle les nanoparticules de dioxyde de titane comprennent en surface au moins un groupement susceptible de former une liaison chimique ayant la formule (I) suivante :
-O-L-(Rⁱ)ₙ (I),
dans laquelle :
- n représente 1, 2 ou 3,
- -L- représente un bras espaceur substitué par n groupes Rⁱ, L étant choisi parmi :
- un groupe -L'-, -(CO)-L'-, -(CO)-NH-L'-, -Si-(A)₃₋ₙ(L')ₚ(O-L')_{q} - ou 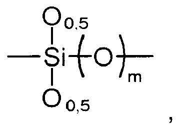 où :
- p et q sont indépendamment des nombres entiers de 1 à 3 tels que la somme p + q vaut n,
- m représente 0 ou 1,
- L' est une chaîne hydrocarbonée linéaire, ramifiée ou cyclique, saturée, insaturée ou aromatique plurivalente,
- A représente un groupe -A' ou -O-A' où A' représente une chaîne hydrocarbonée linéaire, ramifiée ou cyclique, saturée, insaturée ou aromatique monovalente,
- i est un nombre entier variant de 1 à n,
- pour chaque valeur de i, Rⁱ est indépendamment choisi parmi un halogène ou un groupe -OCOCl, -COCl, -SO₂Cl, -COOR₁, -COR₁, -CR₁R₂Cl, -OR₁, -SR₁, -NR₁R₂, - NR₁COR₂, -COR₁NR₂, -NR₁-CO-NR₂R₃, -O-CO-NR₁, -NR₁-CO-OR₂, -CN, -NO₂, -NCO, 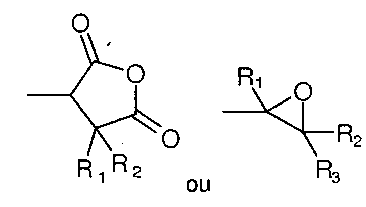 où R₁, R₂ et R₃ représentent indépendamment H ou une chaîne hydrocarbonée linéaire, ramifiée ou cyclique, saturée, insaturée ou aromatique, elle même éventuellement substituée par un ou plusieurs des groupes choisis parmi un halogène ou un groupe -OCOCl, -COCl, -SO₂Cl, -COOR₄, -COR₄, - CR₄R₅Cl, -OR₄, -SR₄, -NR₄R₅, NR₄COR₅, -COR₄NR₅, -NR₄-CO-NR₅R₆, -O-CO-NR₄, -
NR₄-CO-OR₅, -CN, -NO₂, -NCO, 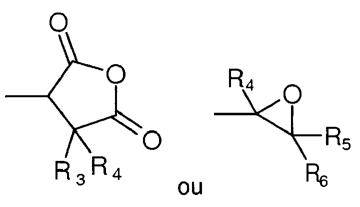 où R₄, R₅ et R₆ représentent indépendamment H ou une chaîne hydrocarbonée linéaire, ramifiée ou cyclique, saturée, insaturée ou aromatique.

3. Conduite flexible sous marine selon la revendication 2, dans laquelle les nanoparticules de dioxyde de titane comprennent en surface au moins un groupement susceptible de former une liaison chimique ayant la formule (II) suivante :
-O-Si-(A)₃₋ₙ(L'-Rⁱ)ₚ(O-L'-Rⁱ)_{q} (II),
dans lesquelles A, n, p, q, i, L' et Rⁱ sont tels que définis dans la revendication 2.

4. Conduite flexible sous marine selon l'une quelconque des revendications 1 à 3, dans laquelle le polymère est un polyamide, un homopolymère ou copolymère de polyfluorure de vinylidène comportant éventuellement des chaînes latérales fonctionnelles ou un polyéthylène comportant des chaînes latérales fonctionnelles.

5. Conduite flexible sous marine selon l'une quelconque des revendications 1 à 4, dans laquelle ladite au moins une couche est la gaine polymérique interne d'étanchéité.

6. Conduite flexible sous marine selon l'une quelconque des revendications 1 à 5, comprenant en outre les couches suivantes :
- au moins une nappe d'armure de traction,
- éventuellement une voûte de pression, et/ou
- éventuellement une carcasse métallique.

7. Procédé de préparation d'une conduite flexible sous marine selon l'une quelconque des revendications 1 à 6, comprenant les étapes suivantes :
a) formation d'une résine polymère comprenant des nanoparticules de dioxyde de titane modifiées en surface et liées chimiquement au polymère comprenant le mélange d'un polymère et de nanoparticules de dioxyde de titane comprenant en surface un groupement susceptible de former une liaison hydrogène et/ou covalente, avec un polymère,
b) extrusion du mélange obtenu à l'étape a) pour former une couche comprenant ladite résine,
c) assemblage de la couche obtenue à l'étape b) avec au moins une autre couche.

8. Procédé selon la revendication 7, dans lequel ledit groupement répond à la formule (I) telle que définie à la revendication 2.

9. Procédé selon la revendication 7 ou 8, dans lequel ledit groupement est susceptible de former une liaison covalente et est choisi parmi les groupements de formule (I) telle que définie dans la revendication 2 dans lesquels au moins un Rⁱ est choisi parmi un halogène ou un groupe -COCI, -OCOCI, -SO₂Cl, -COOH, -CR₁R₂CI, -OH, -SH, -NR₁H, -CN, -NCO,

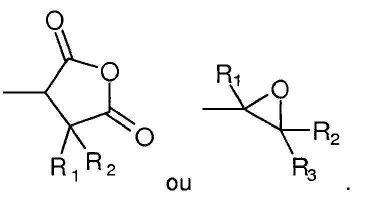

10. Procédé selon l'une quelconque des revendications 7 à 9, comprenant une étape de couplage chimique pour former une liaison covalente entre ledit groupement et les fonctions d'un polymère.

11. Procédé selon la revendication 10, dans lequel le couplage chimique est catalysé par la chaleur, des radiations ou un catalyseur.

12. Procédé selon l'une quelconque des revendications 7 à 11, dans lequel ledit groupement est susceptible de former une liaison covalente et est choisi parmi les groupements de formule (I) telle que définie dans la revendication 2 dans laquelle au moins un Rⁱ est choisi parmi un groupe -F, -COOR₁, -COR₁, -OR₁, -SR₁, -NR₁R₂, - NR₁COR₂, -COR₁NR₂, -NR₁-CO-NR₂R₃, -O-CO-NR₁, -NR₁-CO-OR₂, -CN, -NO₂.

13. Procédé selon l'une quelconque des revendications 7 à 12, comprenant avant l'étape a) une étape de préparation des nanoparticules de dioxyde de titane comprenant en surface un groupement susceptible de former une liaison hydrogène et/ou covalente avec un polymère, ledit groupement ayant la formule (II) suivante :
-O-Si-(A)₃₋ₙ(L'-Rⁱ)p(O-L'-Rⁱ)_{q} (II)
dans laquelle A, n, p, q, i, L' et Rⁱ sont tels que définis dans la revendication 2,
par réaction de nanoparticules de dioxyde de titane avec un composé de formule (III) suivante :
A-O-Si-(A)₃₋ₙ(L'-R')ₚ(O-L'-Rⁱ)_{q} (III)
dans laquelle A, n, p, q, i, L' et Rⁱ sont tels que définis dans la revendication 2.

14. Utilisation d'une conduite flexible sous marine selon l'une quelconque des revendications 1 à 6 pour le transport de fluides, notamment de gaz ou de liquides.

15. Utilisation selon la revendication 14, pour le transport d'hydrocarbures.

## Patentansprüche

1. Flexibles Unterwasserrohr für den Transport von Fluiden, insbesondere von Kohlenwasserstoffen, mindestens eine ein Polymerharz umfassende Schicht umfassend, **dadurch gekennzeichnet, dass** das Polymerharz Nanopartikel aus Titandioxid, die oberflächenmodifiziert sind und durch kovalente Bindung und/oder Wasserstoffbrückenbindung an das Polymer gebunden sind, umfasst.

2. Flexibles Unterwasserrohr nach Anspruch 1, **dadurch gekennzeichnet, dass** die Titandioxid-Nanopartikel oberflächenmäßig mindestens eine Gruppierung umfassen, die geeignet ist, eine chemische Bindung mit der folgenden Formel (I) zu bilden:
-O-L-(Rⁱ)ₙ (I),
in der:
- n 1, 2 oder 3 darstellt,
- -L- einen Spacer darstellt, der durch n Gruppen Rⁱ substituiert ist, wobei L ausgewählt wird aus: - einer Gruppe -L'-, -(CO)-L'-, -(CO)-NH-L'-, -Si-(A)₃₋ₙ(L')ₚ(O-L')_{q}- oder 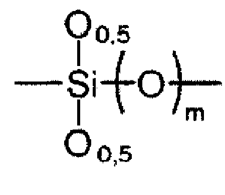 wobei:
- p und q unabhängig ganze Zahlen von 1 bis 3 sind, derart, dass die Summe p+q n ergibt,
- m 0 oder 1 darstellt,
- L' eine lineare, verzweigte oder cyclische, gesättigte, ungesättigte oder aromatische mehrwertige Kohlenwasserstoffkette ist,
- A eine Gruppe A' oder-O-A' darstellt, wobei A' eine lineare, verzweigte oder cyclische, gesättigte, ungesättigte oder aromatische monovalente Kohlenwasserstoffkette darstellt,
- i eine ganze Zahl ist, die zwischen 1 und n variiert,
- für jeden Wert von i Rⁱ unabhängig gewählt wird aus einem Halogen oder einer Gruppe -OCOCl, -COCl, -SO₂Cl, -COOR₁, -COR₁, -CR₁R₂Cl, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂, -NCO, 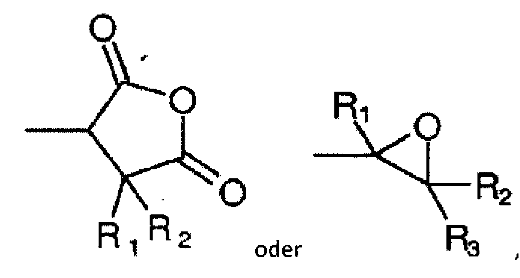 wobei R₁, R₂ und R₃ unabhängig H oder eine lineare, verzweigte oder cyclische, gesättigte, ungesättigte oder aromatische Kohlenwasserstoffkette darstellen, die selbst durch eine oder mehrere der Gruppen, ausgewählt aus einem Halogen oder einer Gruppe -OCOCl, -COCl, -SO₂Cl, -COOR₄, -COR₄, -CR₄R₅Cl, -OR₄, -SR₄, -NR₄R₅, NR₄COR₅, -CO R₄N R₅, -N R₄-CO-NR₅R₆, -O-CO-NR₄, -NR₄-CO-OR₅, -CN, -NO₂, -NCO, 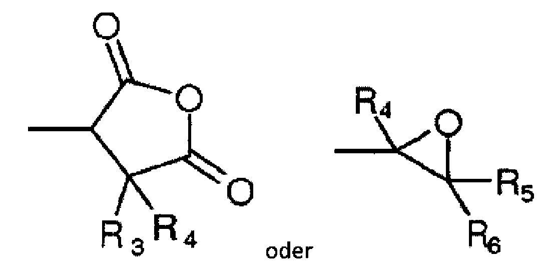 substituiert ist,
wobei R₄, R₅ und R₆ unabhängig H oder eine lineare, verzweigte oder cyclische, gesättigte, ungesättigte oder aromatische Kohlenwasserstoffkette darstellen.

3. Flexibles Unterwasserrohr nach Anspruch 2, bei dem die Titandioxid-Nanopartikel oberflächig mindestens eine Gruppierung umfassen, die geeignet ist, eine chemische Bindung mit der folgenden Formel (II) zu bilden:
O-Si-(A)₃₋ₙ(L'-Rⁱ)ₚ(O-L'-Rⁱ)_{q} (II),
in denen A, n, p, q, i, L' und Rⁱ so definiert sind, wie in Anspruch 2.

4. Flexibles Unterwasserrohr nach einem beliebigen der Ansprüche 1 bis 3, bei dem das Polymer ein Polyamid, ein Polyvinylidenfluoridhomopolymer oder -copolymer, das gegebenenfalls funktionelle Seitenketten aufweist, oder ein Polyethylen, das funktionelle Seitenketten aufweist, ist.

5. Flexibles Unterwasserrohr nach einem beliebigen der Ansprüche 1 bis 4, bei dem die mindestens eine Schicht eine innere Dichtungs-Polymerumhüllung ist.

6. Flexibles Unterwasserrohr nach einem beliebigen der Ansprüche 1 bis 5, außerdem folgende Schichten umfassend:
- mindestens eine Zugarmierungslage,
- gegebenenfalls ein Druckgewölbe und/oder
- gegebenenfalls eine metallische Mantelverstärkung

7. Verfahren zum Herstellen eines flexiblen Unterwasserrohrs nach einem beliebigen der Ansprüche 1 bis 6, folgende Schritte umfassend:
a) Bilden eines Polymerharzes, das Titandioxid-Nanopartikel umfasst, die oberflächenmodifiziert sind und chemisch an das Polymer gebunden sind, umfassend die Mischung eines Polymers und Titandioxid-Nanopartikel, die oberflächenmäßig eine Gruppierung umfassen, die geeignet ist, eine Wasserstoffbrückenbindung und/oder kovalente Bindung mit dem Polymer zu bilden,
b) Extrudieren der im Schritt a) erhaltenen Mischung, um eine das Harz enthaltende Schicht zu bilden,
c) Zusammenfügen der in Schritt b) erhaltenen Schicht mit mindestens einer anderen Schicht.

8. Verfahren nach Anspruch 7, bei dem die Gruppierung der Formel (I) entspricht, wie sie im Anspruch 2 definiert ist.

9. Verfahren nach Anspruch 7 oder 8, bei dem die Gruppierung geeignet ist, eine kovalente Bindung zu bilden und ausgewählt ist aus den Gruppierungen der Formel (I), wie sie im Anspruch 2 definiert ist, bei denen mindestens ein Rⁱ ausgewählt ist aus einem Halogen oder einer Gruppe -COCI, -OCOCI, -SO₂Cl, -COOH, -CR₁R₂Cl, -OH, -SH, -NR₁H, -CN, -NCO,

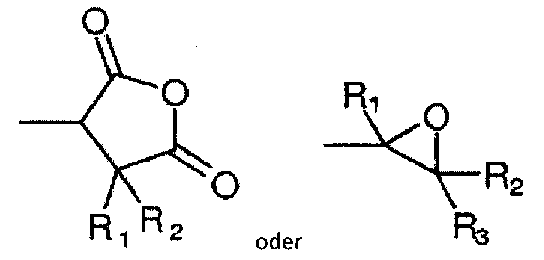

10. Verfahren nach einem beliebigen der Ansprüche 7 bis 9, einen Schritt der chemischen Kopplung umfassend, um eine kovalente Bindung zwischen der Gruppierung und den Funktionen eines Polymers zu bilden.

11. Verfahren nach Anspruch 10, bei dem die chemische Kopplung durch Wärme, durch Strahlungen oder einem Katalysator katalysiert wird.

12. Verfahren nach einem beliebigen der Ansprüche 7 bis 11, bei dem die Gruppierung geeignet ist, eine kovalente Bindung zu bilden und ausgewählt ist aus den Gruppierungen der Formel (I), wie sie im Anspruch 2 definiert ist, bei der mindestens ein Rⁱ ausgewählt ist aus einer Gruppe -F, -COOR₁, -COR₁, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂.

13. Verfahren nach einem beliebigen der Ansprüche 7 bis 12, vor dem Schritt a) einen Schritt der Herstellung von Titandioxid-Nanopartikeln umfassend, die oberflächenmäßig eine Gruppierung umfassen, die geeignet ist, eine Wasserstoffbrückenbindung und/oder kovalente Bindung mit einem Polymer zu bilden, wobei die Gruppierung die folgende Formel (II) aufweist:
-O-Si-(A)₃₋ₙ(L'-Rⁱ)ₚ(O-L'-Rⁱ)_{q} (II),
bei der A, n, p, q, i, L' und Rⁱ so sind, wie in dem Anspruch 2 definiert, durch Reaktion der Titandioxid-Nanopartikel mit einer Verbindung der folgenden Formel (III):
A-O-Si-(A)₃₋ₙ(L'-Rⁱ)ₚ(O-L'-Rⁱ)_{q} (III),
in der A, n, p, q, i, L' und Rⁱ derart sind, wie sie in Anspruch 2 definiert sind.

14. Verwendung eines flexiblen Unterwasserrohrs nach einem beliebigen der Ansprüche 1 bis 6 für den Transport von Fluiden, insbesondere von Gas oder Flüssigkeiten.

15. Verwendung nach Anspruch 14 für den Transport von Kohlenwasserstoffen.

## Claims

1. Flexible underwater pipe for the transport of fluids, especially hydrocarbons, comprising at least one layer comprising a polymer resin, **characterised in that** the polymer resin comprises titanium dioxide nanoparticles which are surface-modified and bonded by a covalent and/or hydrogen bond to the polymer.

2. Flexible underwater pipe according to claim 1, in which the titanium dioxide nanoparticles comprise on the surface at least one group capable of forming a chemical bond and having the following formula (I):
-O-L-(Rⁱ)ₙ (I)
in which:
- n represents 1, 2 or 3,
- -L- represents a spacer substituted by n groups Rⁱ, L being chosen from:
- a group -L'-, -(CO)-L'-, -(CO)-NH-L'-, -Si-(A)₃₋ₙ(L')ₚ(O-L')_{q}- or 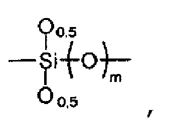 wherein:
- p and q are, independently, integers from 1 to 3, such that the sum p + q is n,
- m represents 0 or 1,
- L' is a linear, branched or cyclic, saturated, unsaturated or aromatic polyvalent hydrocarbon chain,
- A represents a group -A' or -O-A' wherein A' represents a linear, branched or cyclic, saturated, unsaturated or aromatic monovalent hydrocarbon chain,
- i is an integer varying from 1 to n,
- for each value of i, Rⁱ is chosen independently from a halogen or a group -OCOCl, -COCl, -SO₂Cl, -COOR₁, -COR₁, -CR₁R₂Cl, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂, -NCO, 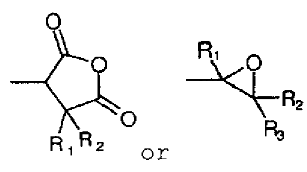 wherein R₁, R₂ and R₃ represent, independently, H or a linear, branched or cyclic, saturated, unsaturated or aromatic hydrocarbon chain which is itself optionally substituted by one or more groups chosen from a halogen or a group -OCOCl, -COCl, -SO₂Cl, -COOR₄, -COR₄, -CR₄R₅Cl, -OR₄, -SR₄, -NR₄R₅, -NR₄COR₅, -COR₄NR₅, -NR₄-CO-NR₅R₆, -O-CO-NR₄, -NR₄-CO-OR₅, -CN, -NO₂, -NCO, 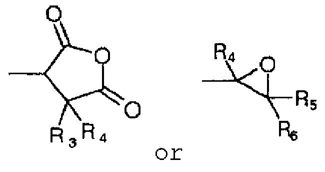 wherein R₄, R₅ and R₆ represent, independently, H or a linear, branched or cyclic, saturated, unsaturated or aromatic hydrocarbon chain.

3. Flexible underwater pipe according to claim 2, wherein the titanium dioxide nanoparticles comprise on the surface at least one group capable of forming a chemical bond and having the following formula (II):
-O-Si-(A)₃₋ₙ(L'-Rⁱ)ₚ(O-L'-Rⁱ)_{q} (II)
in which A, n, p, q, i, L' and Rⁱ are as defined in claim 2.

4. Flexible underwater pipe according to any one of claims 1 to 3, wherein the polymer is a polyamide, a homopolymer or copolymer of polyvinylidene fluoride optionally comprising functional side chains, or a polyethylene comprising functional side chains.

5. Flexible underwater pipe according to any one of claims 1 to 4, wherein said at least one layer is the polymeric inner sealing sheath.

6. Flexible underwater pipe according to any one of claims 1 to 5, further comprising the following layers:
- at least one tensile armour ply,
- optionally a pressure vault, and/or
- optionally a metal carcass.

7. Process for the production of a flexible underwater pipe according to any one of claims 1 to 6, comprising the following steps:
a) forming a polymer resin comprising titanium dioxide nanoparticles which are surface-modified and bonded chemically to the polymer, comprising mixing a polymer and titanium dioxide nanoparticles having on the surface a group capable of forming a hydrogen and/or covalent bond with a polymer,
b) extruding the mixture obtained in step a) to form a layer comprising said resin,
c) assembling the layer obtained in step b) with at least one other layer.

8. Process according to claim 7, wherein said group corresponds to formula (I) as defined in claim 2.

9. Process according to claim 7 or 8, wherein said group is capable of forming a covalent bond and is chosen from the groups of formula (I) as defined in claim 2 in which at least one Rⁱ is chosen from a halogen or a group -COCl, -OCOCl, -SO₂Cl, -COOH, -CR₁R₂Cl, -OH, -SH, -NR₁H, -CN, -NCO,

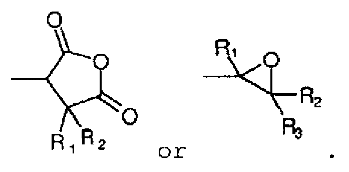

10. Process according to any one of claims 7 to 9, comprising a step of chemical coupling to form a covalent bond between said group and the functional groups of a polymer.

11. Process according to claim 10, wherein the chemical coupling is catalysed by heat, radiation or a catalyst.

12. Process according to any one of claims 7 to 11, wherein said group is capable of forming a covalent bond and is chosen from the groups of formula (I) as defined in claim 2 in which at least one Rⁱ is chosen from a group -F, -COOR₁, -COR₁, -OR₁, -SR₁, -NR₁R₂, -NR₁COR₂, -COR₁NR₂, -NR₁-CO-NR₂R₃, -O-CO-NR₁, -NR₁-CO-OR₂, -CN, -NO₂.

13. Process according to any one of claims 7 to 12, comprising, prior to step a), a step of preparing titanium dioxide nanoparticles comprising on the surface a group capable of forming a hydrogen and/or covalent bond with a polymer, said group having the following formula (II):
-O-Si-(A)₃₋ₙ(L'-Rⁱ)ₚ(O-L'-Rⁱ)_{q} (II)
in which A, n, p, q, i, L' and Rⁱ are as defined in claim 2,
by reaction of titanium dioxide nanoparticules with a compound of the following formula (III):
A-O-Si-(A)₃₋ₙ(L'-Rⁱ)ₚ(O-L'-Rⁱ)_{q} (III)
in which A, n, p, q, i, L' and Rⁱ are as defined in claim 2.

14. Use of a flexible underwater pipe according to any one of claims 1 to 6 for the transport of fluids, especially of gases or liquids.

15. Use according to claim 14 for the transport of hydrocarbons.
